# EUROPÄISCHE PATENTSCHRIFT

(11) **EP 0 714 930 B1**
(45) Veröffentlichungstag und Bekanntmachung des Hinweises auf die Patenterteilung: **13.02.2002**
(21) Anmeldenummer: 95118033.0
(22) Anmeldetag: 16.11.1995
(51) Int. Cl.: C08J 11/24

(54) **Verfahren zum glykolytischen Abbau von Polyurethan-Kunststoffen**
Process for the glycolytic decomposition of polyurethane plastics
Procédé pour la décomposition à l'aide de glycols de matières plastiques de polyuréthane

(30) Priorität: 29.11.1994 DE 4442379
(43) Veröffentlichungstag der Anmeldung: 05.06.1996
(73) Patentinhaber: BAYER AG, 51368 Leverkusen (DE)
(72) Erfinder: Münzmay, Thomas, Dr., D-41539 Dormagen (DE); Fuhrmann, Peter, D-50769 Köln (DE); Lamla, Franz, D-41540 Dormagen (DE); Meckel, Walter, Dr., D-41468 Neuss (DE); Rasshofer, Werner, Dr., D-51061 Köln (DE)

(56) Entgegenhaltungen:
- DE-A- 2 347 299
- DE-A- 3 232 461
- US-A- 4 742 095

## Beschreibung

Die Erfindung betrifft ein neues Verfahren zum glykolytischen Abbau von Polyurethan-Kunststoffabfällen.

Es ist bereits bekannt, nach dem Polyisocyanat-Polyadditionsverfahren hergestellte Kunststoffe durch geeignete Reaktivlösungsmittel in niedermolekulare Bestandteile zu zerlegen und in eine gelöste Form zu überführen. Besondere Beachtung fanden dabei Methoden zum glykolytischen Abbau von Polyurethan-Kunststoffabfällen z.T. unter Zusatz von Aminen, Aminoalkoholen und/oder Katalysatoren, wie sie beispielsweise aus den deutschen Auslege- bzw. Offenlegungsschriften 1 110 405, 2 238 109, 2 304 444, 2 414 091, 2 516 863, 2 557 172, 2 738 572, 2 759 054, 2 902 509, 3 435 014, 3 702 495 und den US-A 3 632 530, 4 014 809, 4 110 266, 4 159 972 und 4 162 995 bekannt sind.

Die Vielzahl dieser einschlägigen Arbeiten läßt erkennen, daß offensichtlich keines der beanspruchten Verfahren eine in jedem Falle befriedigende Problemlösung bietet. In der Tat sind die vorbeschriebenen Verfahren durch eine Reihe von Nachteilen in ihrer technischen Anwendungsbreite sowie in ihrer Wirtschaftlichkeit stark eingeschränkt:
1. Die im allgemeinen mehrere Stunden dauernden Löse- bzw. Reaktionszeiten führen zu unbefriedigenden Raum/Zeit-Ausbeuten und beschränken die Wirtschaftlichkeit.
2. Die für die Lösung bzw. den Abbau der Polyurethan-Kunststoffabfälle benötigten Diolmengen liegen oft im Bereich gewichtsgleicher Mengen oder weit darüber, was zu Lasten der Recyclingquote geht.
3. Die bis zu 250°C betragenden Reaktionstemperaturen führen bei den beschriebenen langen Reaktionszeiten (2 bis 12 Stunden) zu unerwünschten Nebenreaktionen und Schädigung der Regeneratpolyole.
4. Der Zusatz von Katalysatoren bei der Abbaureaktion führt zu Schwierigkeiten bei der Verarbeitung der resultierenden Regeneratpolyole im Isocyanatpolyadditionsprozeß, da diese Katalysatoren im Regeneratpolyol verbleiben und mannigfaltige katalytische Effekte bewirken (Trimerisierung, Dimerisierung, Carbodiimidisierung etc. der Isocyanate).
5. Im Polyurethan-Kunststoffabfall enthaltene Fremdpolymere, insbesondere Thermoplaste wie z.B. Polypropylen, ABS, Polystyrol oder Polycarbonat, werden unter Glykolysebedingungen nicht abgebaut, sondern schmelzen auf und führen zu Verschmutzungen oder gar Beschädigung von Apparaturen und Leitungen.
6. Ein weiteres Problem ergibt sich bei der Glykolyse von Polyurethan-Kunststoffabfällen niedriger Dichte, wie Hart- und/oder Weichschäumen, in konventionellen Rührkesseln. Es stellt sich dem Verarbeiter das Problem, daß ein großes Schaumvolumen (Dichte ca. 40 bis 80 g/l) in einem kleinen Volumen Glykol (Dichte ca. 1100 g/l) gelöst werden muß.

Um die oben dargestellten Probleme zu umgehen, wurden verschiedene Verfahren beschrieben, die diese Nachteile vermeiden:

Die DE 32 32 461 beschreibt ein Verfahren zum kontinuierlichen glykolytischen Abbau von Polyurethan-Kunststoffabfällen in Schneckenmaschinen. Nach diesem Verfahren werden obige Nachteile weitgehend vermieden. Auch ist die Verarbeitung von Polyurethan-Kunststoffabfällen niedriger Dichte möglich. Nachteilig sind die hohen Kosten für Anschaffung und Betrieb eines derartigen Schneckenreaktors mit der dazugehörigen Peripherie.

In den DE-C 40 30 639 und DE-A 41 32 282 wird die Verwendung eines Vielkammerkreiselgerätes (Ultraschallmühle) zur Verflüssigung von mit Lösungsmitteln gequollenem Polyurethan-Kunststoffabfall beschrieben. Das Verfahren ist limitiert auf Polyurethan-Schaumstoffabfälle, da das Material vor der Verflüssigung mit geeigneten Lösungsmitteln gequollen werden muß, was eine große Oberfläche des Materials voraussetzt. Massive Polyurethan-Kunststoffabfälle müßten dagegen erst auf geringe Korngrößen vermahlen werden, was die Wirtschaftlichkeit des Verfahrens in Frage stellt.

Ein weiterer Nachteil des Verfahrens liegt darin, daß Polyurethan-Kunststoffabfälle in der Lage sind, große Mengen an Lösungsmitteln, wie z.B. Polyole, zu absorbieren, ohne daß ein flüssiges, pumpbares Gemisch entsteht. Dieses Phänomen tritt besonders stark bei zelligen Polyurethan-Kunststoffabfällen (Schaumstoffen) auf, die wie ein Schwamm ein Mehrfaches ihres eigenen Gewichtes an Lösemittel aufnehmen können, ohne daß ein fließ- oder pumpfähiges Produkt entsteht. Dies bedeutet, daß man nur eine geringe Recyclingquote erzielen kann.

Eine Möglichkeit, diese Probleme zu umgehen, beschreibt die EP-A 546 415. Die Polyurethan-Kunststoffabfälle werden mit einem gewichtsmäßig großen Überschuß an Polyol glykolysiert und anschließend wird dieser Polyolüberschuß wieder abdestilliert. Dieser zusätzliche Destillationsschritt bedeutet aber einen zusätzlichen Energieaufwand, weil man (i) relativ zuviel Polyol auf Glykolysetemperatur erhitzen muß und (ii) anschließend den Überschuß abdestillieren muß.

Aufgabe der vorliegenden Erfindung ist es, ein Verfahren zur Verfügung zu stellen, mit dem Polyurethan-Kunststoffabfälle durch Lösen und/oder Zersetzen in isocyanatreaktiven Medien mit einer erheblich erhöhten Recyclingrate, innerhalb kürzerer Verweilzeiten und mit geringem apparativem Aufwand aufgearbeitet werden können. Die Aufarbeitungsprodukte sind für den Wiedereinsatz als Rohstoffkomponente für die Herstellung von Polyurethan-Kunststoffen geeignet.

Gegenstand der vorliegenden Erfindung ist ein Verfahren zur Aufarbeitung von Polyurethan-Kunststoffen durch Spaltung mittels niedermolekularer, mindestens zwei isocyanatreaktive Wasserstoffatome aufweisender Verbindungen zu isocyanatreaktive Wasserstoffatome aufweisenden Regeneraten, das dadurch gekennzeichnet ist, daß Polyurethan-Kunststoffe und isocyanatreaktive Wasserstoffatome aufweisende Verbindungen mit der 2- bis 20-fachen, vorzugsweise 5- bis 12- fachen, Gewichtsmenge an Regenerat in einer hochtourig laufenden, zwischen Rotor und Stator hohe Scherkräfte erzeugenden Misch- und Zerkleinerungspumpe vermischt und zerkleinert werden.

Als Polyurethan-Kunststoffe können alle üblichen Polyurethan-Kunststoffe eingesetzt werden, insbesondere Polyurethan-Kunststoffabfälle. Dabei können diese Polyurethan-Kunststoffe anorganische oder organische Verstärkungs- bzw. Modifizierungskomponenten enthalten, wie z.B. Glasfasern oder andere thermoplastische, duroplastische oder elastische Kunststoffe. Das erfindungsgemäße Aufarbeitungsverfahren ist ferner für die Aufarbeitung nicht sortenreiner, Polyurethane enthaltender Kunststoffabfälle geeignet. Die Polyurethan-Kunststoffabfälle können in Form von massivem Polyurethan oder Polyurethan-Schaum eingesetzt werden. Der besondere Vorteil der hohen Recyclingrate kommt insbesondere beim Einsatz von Polyurethan-Schaum zum Tragen. Vorzugsweise werden die Polyurethan-Schaumstoffe nach einer Vorzerkleinerung in stückiger oder Flockenform mit Abmessungen bis 50 mm, vorzugsweise bis 20 mm, eingesetzt.

Als mindestens zwei isocyanatreaktive Wasserstoffatome aufweisende Verbindungen geeignet sind z.B. mehrwertige Alkohole des Molekulargewichtsbereiches 62 bis 10 000, bevorzugt 62 bis 5000, wobei beliebige Gemische derartiger Alkohole eingesetzt werden können. Beispielhaft genannt seien Ethylenglykol, Diethylenglykol, Tri- und Tetraethylenglykol, 1,3-Propylenglykol, 1,2-Propylenglykol, Di-, Tri- und Tetra-1,2-propylenglykol, 1,3- oder 1,4-Butandiol; sowie höherwertige Alkohole, wie z.B. Glycerin, Trimethylolpropan oder Pentaerythrit. Als höhermolekulare mehrwertige Alkohole kommen insbesondere Polymerisate und Copolymerisate von Ethylenoxid und/oder Propylenoxid, gestartet auf di- und/oder höherfunktionellen Alkoholen wie die obengenannten oder auf Wasser oder z.B. auf Zuckern in Frage. Andere höhermolekulare mehrwertige Alkohole, die in Frage kommen, sind z.B. Polytetrahydrofurandiole, Polyesterpolyole und, Polycarbonatpolyole.

Weiter geeignet sind z.B. Aminoalkohole wie z.B. Ethanolamin, Diethanolamin, Triethanolamin, 1,3-Propanolamin, 1,2-Propanolamin, Tripropanolamin; Amine, wie z.B. Dibtuylamin, Morpholin; oder Polyamine, wie z.B. Ethylendiamin, Diethylentriamin, Hexamethylendiamin, Isophorondiamin; oder höhermolekulare Polyamine, die sich durch Ersatz der endständigen Hydroxylgruppen durch primäre Aminogruppen von Polypropylenoxidpolyolen ableiten (Jeffamine™, Texaco Inc.).

Selbstverständlich können die obengenannten isocyanatreaktive Medien auch als beliebige Gemische eingesetzt werden.

Bevorzugt sind die zuerst genannten niedermolekularen Alkohole, insbesondere Ethylenglykol, Diethylenglykol und Dipropylenglykol.

Polyurethan-Kunststoffe und die mindestens zwei isocyanatreaktive Wasserstoffatome aufweisenden Verbindungen werden vorzugsweise in einem Gewichtsverhältnis von 5:1 bis 1:1, besonders bevorzugt 4:1 bis 2:1, eingesetzt.

Die Aufarbeitung der Polyurethan-Kunststoffe erfolgt vorzugsweise bei einer Temperatur von 100 bis 220°C.

Als hochtourig laufende, zwischen Rotor und Stator hohe Scherkräfte erzeugende Misch- und Zerkleinerungspumpen sind auf dem Rotor/Stator-Prinzip beruhende, bei Drehzahlen zwischen 500 und 5000 U/min arbeitende Misch- und Zerkleinerungspumpen geeignet, wie sie unter dem Warenzeichen Gorator® von der Firma Hoelschertechnic-Gorator GmbH, Herne, BRD, oder unter der Bezeichnung Supraton-Maschine von der Firma Deutsche Supraton Bruchmann & Zucker KG, Düsseldorf, BRD, erhältlich sind.

Das erfindungsgemäße Verfahren wird vorzugsweise kontinuierlich durchgeführt.

Dabei kann so vorgegangen werden, daß das Regenerat aus einer vorhergehenden Aufarbeitung von Polyurethan-Kunststoffen aus einem Vorratsbehälter mittels der Misch- und Zerkleinerungspumpe umgepumpt wird und in die das Regenerat führende Leitung vor der Pumpe entsprechende Mengen an mindestens zwei isocyanatreaktive Wasserstoffatome aufweisende Verbindungen und Polyurethan-Kunststoffe eingeleitet werden. Das jeweils neu gebildete Regenerat wird dem Behälter entnommen.

Eine andere Arbeitsweise kann darin bestehen, die mindestens zwei isocyanatreaktive Wasserstoffatome aufweisenden Verbindungen und die Polyurethan-Kunststoffe in den Vorratsbehälter für das Regenerat einzuführen und hinter der Misch- und Zerkleinerungspumpe den auszuschleusenden Anteil an Regenerat abzuzweigen und den anderen Teil in den Behälter zurückzuführen. Ferner ist es erfindungsgemäß möglich, Polyurethan-Kunststoffe und mindestens zwei isocyanatreaktive Wasserstoffe aufweisende Verbindungen vorzuvermischen und danach weiter mit dem Regenerat zu vermischen.

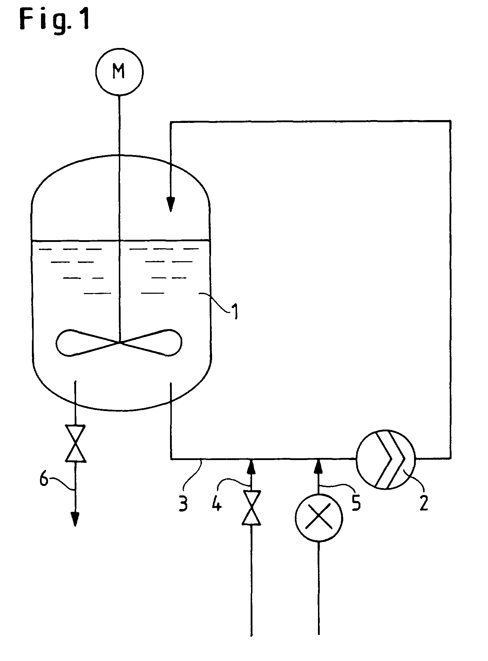

Die Erfindung wird nachfolgend anhand der beigefügten Fig. 1 näher erläutert:
In einem gerührten Vorratsbehälter 1 befindet sich das Regenerat. Dieses wird über Leitung 3 mittels einer Misch- und Zerkleinerungspumpe 2 umgepumpt, wobei in das umgepumpte Regenerat über Leitung 4 die mindestens zwei isocyanatreaktive Wasserstoffatome aufweisende Verbindung eingespeist wird und über Leitung 5 mittels einer Zellradschleuse oder Dosierschnecke Polyurethan-Abfälle eingeführt werden. Aus dem Vorratsbehälter 1 wird ferner Regenerat in dem Maße ausgeschleust, wie neues Regenerat gebildet wurde. Der Vorratsbehälter 1 kann ein Volumen aufweisen, das dem 1/100 bis 1-fachen der stündlichen Pumpleistung der Misch- und Zerkleinerungspumpe 2 entspricht.

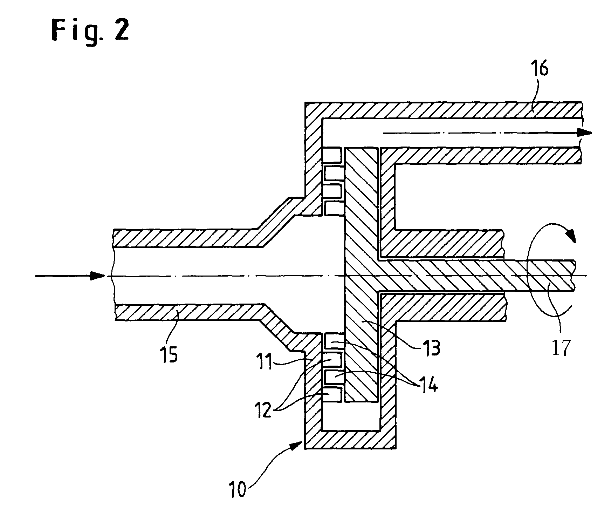

Das Prinzip einer erfindungsgemäß einsetzbaren Misch- und Zerkleinerungspumpe wird anhand der Fig. 2 erläutert. Die Pumpe 10 besteht aus einem Stator 11 mit Stator-Scherelementen 12 und einem Rotor 13 mit Rotor-Scherelementen 14. Der Rotor 13 rotiert um die Achse 17 mit hoher Geschwindigkeit, z.B. 5 000 bis 20 000 U/min. Die Mischung wird über Zuleitung 15 zugeleitet, durch Zentrifugalkräfte durch die Scherelemente 12, 14 gedrückt und über Leitung 16 abgeleitet.

Die Erfindung wird nachfolgend anhand der Beispiele näher erläutert:

### Beispiel 1

Es wird eine Vorrichtung gemäß Fig. 1 eingesetzt.

### a) Anfahren

Im Kessel 1 werden 45 kg Diethylenglykol vorgelegt, auf 180°C erhitzt und über Leitung 3 mittels einer Supraton-Maschine 2 (Typ 205, Förderkapazität 5000 l Wasser/h) mit einer Umlaufgeschwindigkeit von 20 kg/min umgepumpt. In den Diethylenglykol-Strom werden über Leitung 5 pro Minute 1,5 kg eines Polyetherschaums der Dichte 200 kg/m³ mit 1,2 Mol/kg Urethangruppen und 1,35 Mol/kg Harnstoffgruppen nach Zerkleinerung auf eine maximale Flockengröße von 20 mm Durchmesser zudosiert. Nach 50 Minuten werden zusätzlich 0,3 kg/min Diethylenglykol über Leitung 4 zudosiert. Nach weiteren 50 Minuten wird die Zudosierung von Diethylenglykol auf 0,6 kg/min erhöht und gleichzeitig über Leitung 6 2,1 kg/min Regenerat abgezogen.

### b) stationärer Betrieb

Es werden weiterhin 1,5 kg/min Polyetherschaum und 0,6 kg/min Diethylenglykol eingespeist und 2,1 kg/min Glykolysat abgezogen. Die Temperatur im Behälter 1 wird bei 180°C temperiert. Das Glykolysat weist konstant eine OH-Zahl von 295, eine NH-Zahl von 29 und eine Viskosität von 900 mPa.s (bei 50°C) auf.

### Beispiel 2

Beispiel 1 wird wiederholt, jedoch wird anstelle des Polyetherschaumes ein Granulat eines glasfaserverstärkten Polyurethan-Harnstoffs der Dichte 1,26, hergestellt analog Beispiel 2 der DE-A 26 22 951, mit einer Korngröße von 8 mm eingesetzt. Im stationären Betrieb weist das Glykolysat konstant eine OH-Zahl von 305, eine NH-Zahl von 35 und eine Viskosität von 3600 mPa.s (bei 50°C) auf.

## Patentansprüche

1. Verfahren zur Aufarbeitung von Polyurethan-Kunststoffen durch Spaltung mittels mindestens zwei isocyanatreaktive Wasserstoffatome aufweisender Verbindungen zu isocyanatreaktive Wasserstoffatome aufweisenden Regeneraten, **dadurch gekennzeichnet, daß** Polyurethan-Kunststoffe und isocyanatreaktive Wasserstoffatome aufweisende Verbindungen mit der 2- bis 20-fachen Gewichtsmenge an Regenerat in einer hochtourig laufenden, zwischen Rotor und Stator hohe Scherkräfte erzeugenden Misch- und Zerkleinerungspumpe vermischt und zerkleinert werden.

2. Verfahren nach Anspruch 1, **dadurch gekennzeichnet, daß** der Polyurethan-Kunststoff und die isocyanatreaktive Verbindung einem Regeneratstrom, der aus einem beheizten Behälter umgepumpt wird, kontinuierlich zugegeben wird und aus dem Behälter kontinuierlich neu gebildetes Regenerat entnommen wird.

3. Verfahren nach Anspruch 2, **dadurch gekennzeichnet, daß** der Regeneratvorrat im Behälter dem 1/100 bis 1-fachen des stündlich umgepumpten Regeneratstroms entspricht.

4. Verfahren nach einem der Ansprüche 1 bis 3, **dadurch gekennzeichnet, daß** Polyurethan-Kunststoff und Regenerat vorvermischt werden.

## Claims

1. A process for regenerating polyurethane plastics by cleavage by means of compounds containing at least two hydrogen atoms which react with isocyanate to form regenerated materials which contain hydrogen atoms which react with isocyanate, **characterised in that** polyurethane plastics and compounds containing hydrogen atoms which react with isocyanate are mixed and comminuted with 2 to 20 times their amount by weight of regenerated material in a mixing and comminution pump running at high speed and generating high shear forces between its rotor and stator.

2. A process according to claim 1, **characterised in that** the polyurethane plastic and the compound which reacts with isocyanate are continuously added to a stream of regenerated material which is pumped round from a heated vessel and newly formed regenerated material is continuously withdrawn from the vessel.

3. A process according to claim 2, **characterised in that** the supply of regenerated material in the vessel corresponds to 1/100 to 1 times the flow of regenerated material pumped round per hour.

4. A process according to any one of claims 1 to 3, **characterised in that** polyurethane plastic and regenerated material are premixed.

## Revendications

1. Procédé pour traiter des résines synthétiques de polyuréthanes par scission en matière régénérée contenant des atomes d'hydrogène réactifs avec les isocyanates à l'aide de composés à au moins deux atomes d'hydrogène réactifs avec les isocyanates, **caractérisé en ce que** les résines de polyuréthanes et les composés contenant des atomes d'hydrogène réactifs avec les isocyanates sont mélangés et broyés avec 2 à 20 fois leur poids de matière régénérée dans une pompe de mélange et de broyage tournant à grande vitesse et exerçant des forces puissantes de cisaillement entre le rotor et le stator.

2. Procédé selon la revendication 1, **caractérisé en ce que** la résine de polyuréthane et le composé réactif avec les isocyanates sont introduits en continu dans un courant de matière régénérée mise en circulation à partir d'un réservoir chauffé, et **en ce que** la matière nouvellement régénérée est évacuée en continu du réservoir.

3. Procédé selon la revendication 2, **caractérisé en ce que** le volume du réservoir de matière régénérée représente de 1/100 à une fois le volume de matière régénérée circulant en 1 h.

4. Procédé selon l'une des revendications 1 à 3, **caractérisé en ce que** la résine de polyuréthane et la matière régénérée sont mélangées au préalable.
